# EUROPÄISCHE PATENTANMELDUNG

(11) **EP 1 168 194 A1**
(43) Veröffentlichungstag der Anmeldung: **02.01.2002**
(21) Anmeldenummer: 00113859.3
(22) Anmeldetag: 30.06.2000
(51) Int. Cl.: G06F 17/30

(54) **Verfahren zum auffinden von Textinformationen in einem Computernetzwerk**

(71) Anmelder: Financialbot.com AG, 40549 Düsseldorf (DE)
(72) Erfinder: Doelle, Stefan, 47807 Krefeld (DE); Wojczal, Artur, 66-440 Skwierzyna (PL); Dölle, Hans-Peter, 40667 Meerbusch (DE)
(74) Vertreter: Cohausz & Florack

(57) **Zusammenfassung**

Die Erfindung betrifft ein Verfahren zum Auffinden von Textinformationen in einem Computernetzwerk, insbesondere dem Internet, bei dem das technische Problem, daß aus dem Stand der Technik bekannte Verfahren zum Auffinden von Textinformationen in einem Computernetzwerk derart auszugestalten und weiterzubilden, daß dem Benutzer effizient und zuverlässig die Textinformationen zugeleitet werden, die möglichst umfangreich tatsächlich von Bedeutung sind, gelöst wird, durch ein Verfahren, bei dem von einem Benutzer in einen Computer (Client) mindestens ein Suchwort und/oder eine Suchwortkombination als Suchkriterium eingegeben wird, bei dem vom Benutzer für zumindest einen Teil der Suchkriterien ein Fuzzylogik-Wert zugeordnet wird, bei dem vom Client von mindestens einem der im Computernetzwerk zusammengeschlossenen Computer (Server) mindestens eine Textinformation heruntergeladen wird, bei dem vom Client in jeder aufgefundenen Textinformation nach Suchkriteriem gesucht wird und zu jedem aufgefundenen Suchkriterium ein Fuzzylogik-Wert berechnet wird, bei dem vom Client der Wichtigkeitsgrad der aufgefundenen Textinformation in Abhängigkeit von dem mindestens einen Fuzzylogik-Wert berechnet wird und bei dem vom Client in Abhängigkeit von dem Wichtigkeitsgrad die aufgefundene Textinformation dem Benutzer zugeleitet wird.

## Beschreibung

Die vorliegende Erfindung betrifft ein Verfahren zum Auffinden von Textinformationen in einem Computernetzwerk, insbesondere dem Internet. Ziel ist es dabei, entsprechend eines Suchprofils eines Benutzers die Textinformationen herauszuselektieren, um dem Benutzer gezielt möglichst nur die Informationen zukommen zu lassen, die den Benutzer aus einer Vielzahl von Textinformationen interessieren.

Aus dem Stand der Technik ist es bekannt, daß der Benutzer ein bestimmtes Suchprofil eingeben kann, in dem er Worte und/oder Wortkombinationen angibt, die in Textinformationen auftreten sollen, um diese als für den Benutzer interessant und wichtig zu kennzeichnen. Dieses Verfahren weist den Nachteil auf, daß die Suche und Auswahl der Textinformationen ohne eine Bewertung der Suchkriterien erfolgt und somit Textinformationen herausselektiert werden, die zwar die Suchbegriffe beinhalten, jedoch trotzdem keine Relevanz für den Benutzer besitzen.

Aus dem Stand der Technik ist weiterhin bekannt, ein Verfahren zum Auffinden von Textinformationen mit Hilfe einer neuronalen Netzstruktur durchzuführen. Neuronale Netze sind dynamische Systeme, die aus einfach aufgebauten Einheiten, den Neuronen, bestehen, die über ein System von gerichteten Verbindungen miteinander wechselwirken. Daraus lassen sich so genannte künstliche neuronale Netze erzeugen, die beispielsweise für sensorische und motorische Verarbeitungen, insbesondere von Prozeßsteuerungen eingesetzt werden. Eine Übertragung auf ein Verfahren zum Analysieren von Textinformationen ist jedoch nicht erfolgreich gewesen.

Ebenso ist es aus dem Stand der Technik bekannt, ein Verfahren zum Auffinden von Textinformationen in einem Computernetzwerk mit Hilfe von aus Evolutionstheorien resultierenden Lösungen zu entwickeln. Jedoch sind auch hier nicht zufriedenstellende Ergebnisse erzielt worden, die Qualität der Auswahl der Textinformationen für eine Benutzer anhand eines Suchprofils zu verbessern. Das Verfahren erzeugte weiterhin eine zu große Anzahl von für den Benutzer uninteressanten Textinformationen.

Der Erfindung liegt daher das technische Problem zugrunde, das aus dem Stand der Technik bekannte Verfahren zum Auffinden von Textinformationen in einem Computernetzwerk derart auszugestalten und weiterzubilden, daß dem Benutzer effizient und zuverlässig die ihm interessanten Textinformationen zugeleitet werden.

Das zuvor aufgezeigte technische Problem wird erfindungsgemäß durch ein Verfahren mit den Merkmalen des Anspruches 1 gelöst, bei dem von einem Benutzer in einen Computer (Client) mindestens ein Suchwort und/oder eine Suchwortkombination als Suchkriterium eingegeben wird, bei dem vom Benutzer für zumindest einen Teil der Suchkriterien ein Fuzzylogik-Wert zugeordnet wird, bei dem vom Client von mindestens einem der im Computernetzwerk zusammengeschlossenen Computer (Server) mindestens eine Textinformation heruntergeladen wird, bei dem vom Client in jeder aufgefundenen Textinformation nach Suchkriterien gesucht wird und zu jedem aufgefundenen Suchkriterium ein Fuzzylogik-Wert berechnet wird, bei dem vom Client der Wichtigkeitsgrad der aufgefundenen Textinformation in Abhängigkeit von dem mindestens einen Fuzzylogik-Wert berechnet wird und bei dem vom Client in Abhängigkeit von dem Wichtigkeitsgrad die aufgefundene Textinformation dem Benutzer zugeleitet wird.

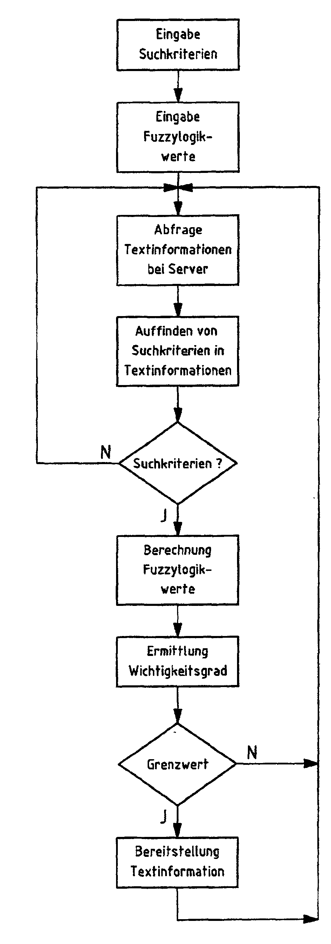

Erfindungsgemäß ist erkannt worden, daß das aus anderen Bereichen der Technik bekannte Verfahren der Fuzzylogik auch für die spezielle Anwendung des Analysierens von Textinformationen geeignet ist. Die Fuzzylogik baut auf der Theorie unscharfer Mengen auf, bei der die vagen, subjektiven und mehrdeutigen Begriffe und Symbole menschlichen Denkens algorithmisch nachvollzogen werden. Dabei ergibt sich die Möglichkeit, sich dem menschlichen Denken und den damit verbunden Entscheidungsprozessen anzunähern, ohne dabei an die Grenzen der starren zweiwertigen Logik (wahr oder falsch) begrenzt zu sein. Wesentlicher Bestandteil der Fuzzylogik besteht darin, einzelnen Elementen einer unscharfen Menge Fuzzylogik-Werte im numerischen Intervall zwischen 0 und 1 zuzuordnen. Dabei bedeutet der Fuzzylogik-Wert 1 die volle Zugehörigkeit und ein Fuzzylogik-Wert von 0 keine Zugehörigkeit zu der betrachteten Menge. Zwischen diesen Fuzzylogik-Werten findet ein kontinuierlicher Übergang von "Element-Sein" zu "Nicht-Element-Sein" statt. Diese Definition kommt der Abbildung unscharf abgegrenzter Begriffe entgegen.

Die vorliegende Erfindung überträgt nun die Fuzzy-Logik auf das Verfahren zum Auffinden von Textinformationen dadurch, daß jedem Suchwort und/oder jeder Suchwortkombination als Suchkriterium ein Fuzzylogik-Wert zugeordnet wird. Aufgefundene Textinformationen, die aus dem Computernetzwerk heruntergeladen werden, werden dann automatisch vom Client auf das Auftreten eines oder mehrerer Suchkriterien hin analysiert. Somit können ein oder mehrere Fuzzylogik-Werte einer Textinformation zugeordnet werden, aus der dann der Wichtigkeitsgrad der aufgefundenen Textinformation vom Client zugeordnet werden kann.

In bevorzugter Weise wird vom Client der Wichtigkeitsgrad der Textinformation aus der Summe aller berechneten Fuzzylogik-Werte berechnet. Somit werden Textinformationen um so höher in ihrer Wichtigkeit für den Benutzer vom Client eingestuft, je mehr und je größere Fuzzylogik-Werte der Textinformation zugeordnet werden. Es reichen somit wenige große Fuzzylogik-Werte oder eine Mehrzahl von niedrigeren Fuzzylogik-Werten aus, um einen geeigneten Wichtigkeitsgrad zu erreichen.

Bei einer weiteren bevorzugten Ausführungsform des erfindungsgemäßen Verfahrens wird vom Client der Wichtigkeitsgrad der Textinformation aus dem Mittelwert aller berechneten Fuzzylogik-Werte berechnet. Somit wird unabhängig von der Anzahl der einer Textinformation zugewiesenen Fuzzylogik-Werten ein zwischen den Werten 0 und 1 liegender Mittelwert zugeordnet. Aus dem Mittelwert läßt sich dann der Wichtigkeitsgrad der aufgefundenen Textinformation ableiten.

Bei einer weiteren bevorzugten und vorteilhaften Ausgestaltung der vorliegenden Erfindung wird vom Client der Wichtigkeitsgrad der Textinformation aus der Anzahl der aufgefundenen Suchkriterien und dem Mittelwert aller berechneten Fuzzylogik-Werte berechnet. Somit geht nicht nur der Mittelwert der Fuzzylogik-Werte, sondern auch die Anzahl der aufgefundenen Suchkriterien bei der Beurteilung des Wichtigkeitsgrades der Textinformation ein. Daher kann berücksichtigt werden, daß beispielsweise nur ein aufgefundenes Suchkriterium mit einem hohen Fuzzylogik-Wert in der Wichtigkeit genauso zu bewerten ist, wie beispielsweise 10 aufgefundene Suchkriterien, deren Fuzzylogik-Werte über eine Bereich streuen und somit zu einem niedrigeren Mittelwert führen.

Das zuvor beschriebene erfindungsgemäße Verfahren sowie deren vorteilhafte Ausgestaltungen können in verschiedenen Sachbereichen eingesetzt werden. Ein bevorzugter Sachbereich liegt darin, Wirtschaftsinformationen aus der Vielzahl von angebotenen Textinformationen im Internet herauszufinden und einem Benutzer entsprechend seines Suchprofiles zuzuleiten. So kann ein Benutzer beispielsweise den Namen einer ihn interessierenden Firma sowie weitere Suchworte wie "Aktie", "Gewinn", "Verlust" und/oder "Dividende" eingegeben werden. Diesen Worten weist der Benutzer relativ hohe Fuzzylogik-Werte, beispielsweise im Bereich von 0,8 bis 1,0 zu. Daneben will der Benutzer verhindern, daß ihm Textinformationen zugeleitet werden, die mit der genannten Firma verbunden sind, die jedoch aus dem Sportbereich kommen, wo die Firma beispielsweise als Sponsor auftritt. Daher wird der Benutzer verschiedene Sportbegriffe wie "Fußball" oder "Formel 1" in Kombination mit dem Namen der Firma als Wortkombination eingeben und mit einem niedrigen Fuzzylogik-Wert versehen. Somit kann der Benutzer Sportmeldungen unter Benennung des Namens der Firma aus der Suche ausblenden, auch wenn diese Textmeldung gegebenenfalls weitere Suchkriterien aufweist.

In weiter bevorzugter Weise kann vom Benutzer ein Grenzwert für den Wichtigkeitsgrad angegeben werden, so daß vom Client eine aufgefundene Textinformation nur dann dem Benutzer zugeleitet wird, wenn der Wichtigkeitsgrad oberhalb des Grenzwertes liegt. Somit kann der Benutzer beispielsweise für unterschiedliche Profile von Suchkriterien angeben, ab welchem Wichtigkeitsgrad aufgefundene Textinformationen ihm zugeleitet werden. So kann er beispielsweise für eine Firma, die ihn besonders interessiert, den Grenzwert niedrig ansetzen, während er beispielsweise für eine andere Firma den Grenzwert höher ansetzt, über die er nur bei besonders wichtigen Textinformationen informiert werden möchte.

Das zuvor beschriebene erfindungsgemäße Verfahren sowie deren zusätzliche Ausgestaltungen können in weiter bevorzugter Weise dadurch weiterentwickelt werden, daß vom Client die als wichtig eingestuften Textinformationen nach weiteren Worten und/oder Wortkombinationen durchsucht werden. Die aufgefundenen Worte und/oder Wortkombinationen werden dann mit einem aus dem Wichtigkeitsgrad der Textinformation abgeleiteten Fuzzylogik-Werte verknüpft. Somit kann vom Client automatisch das Suchprofil eines Benutzers weiterentwickelt und spezifiziert werden. Denn bisher nicht vom Benutzer angegebenen Worte und/oder Wortkombinationen werden automatisch ausfindig gemacht und dem Suchprofil hinzugefügt. Weiterhin ist es dabei bevorzugt, daß vom Client eine Mehrzahl von Fuzzylogik-Werten zu einem Wort oder einer Wortkombination gespeichert werden. Vom Client wird das Wort oder die Wortkombination nur dann als neues Suchkriterium abgespeichert, wenn eine Mindestanzahl von Fuzzylogik-Werten aufgefunden worden ist, deren Mittelwert zusätzlich oberhalb eines vorgegebenen Wertes liegt. Darauf folgt, daß ein bestimmtes Wort oder eine bestimmte Wortkombination mehr als einmal, vorzugsweise mehrfach aufgetreten sein muß, um als weiteres Suchkriterium angewendet zu werden. Zudem muß der Mittelwert der somit erzeugten Fuzzylogik-Werte oberhalb eines vorgegebenen Wertes liegen, damit das Wort oder die Wortkombination zukünftig als Suchkriterium herangezogen wird. Dadurch wird wirkungsvoll verhindert, daß eine zu große Anzahl von Suchkriterien erzeugt wird und daß Verfahren ausufert und zu ungenau wird.

Eine weitere Form des automatischen Weiterentwickelns des Suchprofils durch den Client besteht darin, daß vom Client festgestellt wird, ob vom Benutzer die zugeleitete Textinformation als wichtig oder als weniger wichtig eingestuft worden ist. Beispielsweise kann erkannt werden, ob der Benutzer diese Textinformation an sich liest, also die zugeordnete Datei öffnet. Darüber hinaus kann der Lernprozeß aktiv vom Benutzer unterstützt werden, daß er auf einer Skala den Wichtigkeitsgrad der Textinformation selber einstuft und somit ein Korrekturwert vom Client berücksichtigt werden kann. Der Client kann dann in bevorzugter Weise in Abhängigkeit von der Bewertung durch den Benutzer die Fuzzylogik-Werte der in der Textinformation aufgefundenen und somit zugeordneten Suchworte und/oder Suchwortkombinationen ändern. Fällt beispielsweise die Bewertung des Wichtigkeitsgrades durch den Benutzer geringer aus, als es vom Client berechnet worden ist, so können die zugeordneten Suchworte und/oder Suchwortkombinationen mit einem geringfügig geringeren Fuzzylogik-Wert behaftet werden, als bisher verwendet worden ist. Somit können entweder vom Benutzer selber Korrekturen an dem einmal eingegebenen Suchprofil durchgeführt werden. Zum anderen kann vom Client das Suchprofil der Suchkriterien an ein über einen längeren Zeitraum sich änderndes Verhalten des Benutzers angepaßt werden. Somit "kennt" der Client jeweils sehr genau das Suchprofil des Benutzers und kann dementsprechend die richtigen Textinformationen aus dem Computernetzwerk herausfiltern.

Bei einer weiteren Ausgestaltung der vorliegenden Erfindung werden vom Client weitere Informationsquellen selbständig aus den als wichtig eingestuften Textinformationen ermittelt. Dieses geschieht in vorteilhafter Weise dadurch, daß vom Client Netzwerkadressen, also insbesondere Internetadressen, von weiteren Informationsquellen gesucht werden. Wenn also beispielsweise von einem ersten Anbieter von Textinformationen die Daten von einem zweiten Anbieter bezogen werden, so wird dieses üblicher Weise vom ersten Anbieter in den Textinformationen angegeben. Um zukünftig an den ursprünglichen Anbieter, also den zweiten Anbieter direkt zu gelangen, kann vom Client die Netzwerkadresse des zweiten Anbieters zukünftig selbst ausgenutzt werden. Dadurch wird die Aktualität der dem Benutzer zugeleiteten Textinformationen erhöht werden, da möglichst originäre Informationsquellen genutzt werden.

Das erfindungsgemäße Verfahren sowie dessen vorteilhafte Ausgestaltungen sind bisher anhand eines Benutzers und einer direkten Verknüpfung zwischen dem Client und dem Benutzer dargestellt worden. Die häufigere Anwendung besteht jedoch darin, daß eine Mehrzahl von Benutzern einen Client benutzen, um Textinformationen zugeleitet zu bekommen. Daher besteht eine bevorzugte Ausgestaltung des erfindungsgemäßen Verfahren darin, daß vom Client eine Mehrzahl von Benutzern zu deren Suchkriterien Textinformationen gesammelt und werden und bei dem jedem Benutzer entsprechend seiner Suchkriterien die Textinformationen zugeleitet werden. Es werden somit von allen Benutzern die Suchkriterien zu einem übergeordneten Suchprofil zusammengestellt und alle dazu passenden Textinformationen aus dem Computernetzwerk vom Client gesammelt. Anschließend werden je nach dem Suchprofil eines Benutzers die Textinformationen nach den Suchkriterien durchsucht und in der zuvor beschriebenen Weise ausgewertet und ausselektiert.

Das zuvor beschriebene erfindungsgemäße Verfahren sowie deren vorteilhafte Ausgestaltungen sind dahingehend allgemein beschrieben worden, daß die ausgewählten Textinformationen dem Benutzer zugeleitet werden. Unter Zuleiten können verschiedene technische Maßnahmen verstanden werden, so können die Textinformationen beispielsweise per elektronischer Post (e-mail) oder per Fax an der Benutzer übertragen werden. Andererseits kann dem Benutzer die Möglichkeit gegeben werden, eine Datenbank auf dem Client zu benutzen, aus der der Benutzer die für ihn herausselektierten Textinformationen nachlesen kann. Jede andere Form des Zuleitens der Textinformationen ist darüber hinaus ebenfalls möglich.

Das oben aufgezeigte technische Problem wird auch durch ein EDV-System zur Verwirklichung eines erfindungsgemäßen Verfahrens gemäß Anspruch 13 gelöst. Das EDV-System umfaßt dabei mindestens einen Server und einen Client, die über ein Computernetzwerk, insbesondere das Internet miteinander verbunden sind.

Darüber hinaus wird das oben aufgezeigte technische Problem auch durch ein Computer-Programm gemäß Anspruch 14 mit Programmbefehlen für ein EDV-System zur Verwirklichung des erfindungsgemäßen Verfahrens gelöst.

Im folgenden wird die Erfindung anhand eines Blockdiagramms näher erläutert, das die einzige beigefügte Figur der Zeichnung zeigt.

In Schritt 10 wird vom Benutzer im Client-Computer eine Liste von Suchkriterien eingegeben. Diese Liste kann ein oder mehrere Suchworte und/oder Suchwortkombinationen beinhalten.

In Schritt 12 wird vom Benutzer zu jedem Suchkriterium ein Fuzzylogik-Wert eingegeben. Die Schritte 10 und 12 sind die einzigen beiden Schritte, bei denen der Benutzer in das Verfahren eingreift. Sämtliche weiteren Schritte werden vom Client-Computer selbsttätig und automatisch durchgeführt, wie im folgenden dargelegt wird.

Im Schritt 14 werden vom Client bei einem oder mehreren Servern des Computernetzwerkes Textinformationen abgefragt und heruntergeladen, also auf einem Speichermedium des Client gespeichert.

Im Schritt 16 werden die heruntergeladenen Textinformationen vom Client anhand der Liste der Suchkriterien des Benutzers analysiert. Werden in der Textinformation keine Suchkriterien aufgefunden, so wird im Entscheidungsschritt 18 die Analyse des Textes der Textinformation abgebrochen und eine neue Textinformation von einem Server heruntergeladen. Wird im Schritt 18 festgestellt, daß in der Textinformation mindestens ein Suchkriterium aufgefunden worden ist, so wird im Schritt 20 vom Client der zugeordnete Fuzzylogik-Wert zu dem mindestens einen Suchkriterium berechnet.

Im weiteren Schritt 22 wird dann vom Client der Wichtigkeitsgrad der Textinformation aus den Fuzzylogik-Werten aller aufgefundener Suchkriterien berechnet.

Im folgenden Entscheidungsschritt wird dann bestimmt, ob der Wichtigkeitsgrad oberhalb eines vorgegebenen Grenzwertes liegt. Ist dieses der Fall, so wird im Schritt 24 die Textinformation dem Benutzer zugeleitet. Anschließend wird dann das Verfahren mit Schritt 14 fortgeführt. Wird im Entscheidungsschritt 24 festgestellt, daß der Wichtigkeitsgrad den Grenzwert nicht überschreitet, so wird die entsprechende Textinformation nicht dem Benutzer zugeleitet und direkt das Verfahren mit Schritt 14 fortgesetzt.

## Patentansprüche

1. Verfahren zum Auffinden von Textinformationen in einem Computernetzwerk, insbesondere dem Internet,
- bei dem von einem Benutzer in einen Computer (Client) mindestens ein Suchwort und/oder eine Suchwortkombination als Suchkriterium eingegeben wird,
- bei dem vom Benutzer für zumindest einen Teil der Suchkriterien ein Fuzzylogik-Wert zugeordnet wird,
- bei dem vom Client von mindestens einem der im Computernetzwerk zusammengeschlossenen Computer (Server) mindestens eine Textinformation heruntergeladen wird,
- bei dem vom Client in jeder aufgefundenen Textinformation nach Suchkriterien gesucht wird und zu jedem aufgefundenen Suchkriterium ein Fuzzylogik-Wert berechnet wird,
- bei dem vom Client der Wichtigkeitsgrad der aufgefundenen Textinformation in Abhängigkeit von dem mindestens einen Fuzzylogik-Wert berechnet wird und
- bei dem vom Client in Abhängigkeit von dem Wichtigkeitsgrad die aufgefundene Textinformation dem Benutzer zugeleitet wird.

2. Verfahren nach Anspruch 1, bei dem vom Client der Wichtigkeitsgrad der Textinformation aus der Summe aller berechneten Fuzzylogik-Werte berechnet wird.

3. Verfahren nach Anspruch 1, bei dem vom Client der Wichtigkeitsgrad der Textinformation aus dem Mittelwert aller berechneten Fuzzylogik-Werte berechnet wird.

4. Verfahren nach Anspruch 1, bei dem vom Client der Wichtigkeitsgrad der Textinformation aus der Anzahl der aufgefundenen Suchkriterien und dem Mittelwert aller berechneten Fuzzylogik-Werte berechnet wird.

5. Verfahren nach einem der Ansprüche 1 bis 4, bei dem vom Benutzer ein Grenzwert für den Wichtigkeitsgrad angegeben wird und bei dem vom Client eine aufgefundene Textinformation nur dann dem Benutzer zugeleitet wird, wenn der Wichtigkeitsgrad oberhalb des Grenzwertes liegt.

6. Verfahren nach einem der Ansprüche 1 bis 5, bei dem vom Client die als wichtig eingestuften Textinformationen nach weiteren Worten und/oder Wortkombinationen durchsucht werden und bei dem die aufgefundenen Worte und/oder Wortkombinationen mit einem aus dem Wichtigkeitsgrad abgeleiteten Fuzzylogik-Wert verknüpft werden.

7. Verfahren nach Anspruch 6, bei dem vom Client eine Mehrzahl von Fuzzylogik-Werten zu einem Wort oder einer Wortkombination gespeichert werden und bei dem vom Client das Wort oder die Wortkombination als neues Suchkriterium abgespeichert wird, wenn eine Mindestanzahl von Fuzzylogik-Werten aufgefunden worden ist, deren Mittelwert oberhalb eines vorgegebenen Wertes liegt.

8. Verfahren nach einem der Ansprüche 1 bis 7, bei dem vom Client festgestellt wird, ob vom Benutzer die zugeleitete Textinformation als wichtig eingestuft worden ist.

9. Verfahren nach Anspruch 8, bei dem vom Client in Abhängigkeit von der Bewertung durch den Benutzer die Fuzzylogik-Werte der zugeordneten Suchworte und/oder Suchwortkombinationen geändert werden.

10. Verfahren nach einem der Ansprüche 1 bis 9, bei dem vom Client weitere Informationsquellen selbständig aus den als wichtig eingestuften Textinformationen ermittelt werden.

11. Verfahren nach Anspruch 10, bei dem vom Client Netzwerkadressen, insbesondere Internetadressen, von weiteren Informationsquellen gesucht werden.

12. Verfahren nach einem der Ansprüche 1 bis 11, bei dem vom Client für eine Mehrzahl von Benutzern zu deren Suchkriterien Textinformationen gesammelt werden und bei dem jedem Benutzer entsprechend seiner Suchkriterien die Textinformationen zugeleitet werden.

13. EDV-System zur Verwirklichung eines Verfahrens nach einem der Ansprüche 1 bis 12.

14. Computer-Programm mit Programmbefehlen für ein EDV-System zur Verwirklichung eines Verfahrens nach einem der Ansprüche 1 bis 12.

15. Computer-Programm nach Anspruch 14, gespeichert auf einem maschinenlesbaren Medium.
